(19) Europäisches Patentamt
European Patent Office
Office européen des brevets

(11) **EP 2 543 620 B1**

(12) **EUROPÄISCHE PATENTSCHRIFT**

(45) Veröffentlichungstag und Bekanntmachung des Hinweises auf die Patenterteilung:
**20.05.2015 Patentblatt 2015/21**

(51) Int Cl.:
**B66C 15/00** *(2006.01)* **B66C 19/00** *(2006.01)*
**E04B 1/98** *(2006.01)* **F16F 7/10** *(2006.01)*

(21) Anmeldenummer: **11172696.4**

(22) Anmeldetag: **05.07.2011**

(54) **Schwingungsdämpfer zur Dämpfung einer Schwingung einer schwingungsfähigen Struktur**

Vibration damper for attenuating the oscillation of a structure which can vibrate

Amortisseur d'oscillations pour amortir les oscillations de structures susceptibles d'osciller

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.01.2013 Patentblatt 2013/02**

(73) Patentinhaber: **Siemens Aktiengesellschaft**
**80333 München (DE)**

(72) Erfinder:
• **Forster, Gerhard**
**90592 Schwarzenbruck (DE)**
• **Hamann, Jens**
**90765 Fürth (DE)**
• **Ladra, Uwe**
**91056 Erlangen (DE)**
• **Schäfers, Elmar**
**90763 Fürth (DE)**

(56) Entgegenhaltungen:
EP-A1- 2 327 651     JP-A- 3 200 694
JP-A- 58 220 083     JP-A- 61 041 032
US-A- 4 635 892

**EP 2 543 620 B1**

**Beschreibung**

Die vorliegende Erfindung betrifft einen Schwingungsdämpfer zur Dämpfung einer Schwingung einer schwingungsfähigen Struktur, insbesondere eines Krans.

Schlecht gedämpfte Eigenfrequenzen können bei Maschinen dazu führen, dass diese nur mit eingeschränkter Produktivität arbeiten können oder gar keine Bearbeitung möglich ist, da die Maschinen instabil werden.

Bei Containerkränen, die zum Be- und Entladen von Containerschiffen eingesetzt werden, regt beispielsweise die Verfahrbewegung der Laufkatze die Kranstruktur zu einer Schwingung in Laufkatzenfahrtrichtung an. Die Schwingungsamplitude kann in Abhängigkeit von der Bauart und der Größe des Krans bis zu einem Meter betragen. Da die Toleranzen bei der Aufnahme und dem Absetzen von Containern meist nur im Bereich weniger Millimeter liegen, muss der Kranführer stets abwarten, bis die Schwingung der Kranstruktur entsprechend abgeklungen ist. Dieses Warten beim Containerumschlag kostet viel Zeit und verursacht unerwünscht hohe Kosten.

Eine Möglichkeit, die Schwingung einer Kranstruktur zu verringern, besteht darin, das Kranportal steifer auszulegen, was mit einem hohen Aufwand und Materialeinsatz einhergeht. Darüber hinaus ist eine ausreichende Versteifung der Kranstruktur aufgrund baulicher Muss-Kriterien an die Kranstruktur häufig nicht möglich, da beispielsweise bestimmte Vorgaben an die Spurbreite, die Querschnittsflächen, die Durchfahrtshöhe oder dergleichen erfüllt sein müssen.

Alternativ oder zusätzlich zu einer konstruktiven Versteifung der Kranstruktur ist es bekannt, so genannte passive Schwingungstilger einzusetzen. Derartige Schwingungstilger umfassen normalerweise einen Dämpfer mit Federelementen und weisen als zentrales Wirkelement eine Schwingmasse auf, die nachfolgend als Dämpfermasse bezeichnet wird. Die Dämpfermasse ist dabei derart mit der zu dämpfenden Kranstruktur gekoppelt, dass sie gegenläufig zur Kranstruktur schwingt. Zur Erzielung einer effektiven Tilgerwirkung muss das Gewicht der Dämpfermasse allerdings sehr hoch sein. Im Einzelfall beträgt das Gewicht bis zu 60 Tonnen.

Weitere Schwingungsdämpfungssysteme sind in den Druckschriften EP 2 327 651 A1, JP 61 041032 A, JP 3 200 694 A und US 4,635,892 A offenbart. Weiterhin offenbart die Druckschrift JP 58220083 A ein Schwingungsdämpfungssystem gemäß dem Oberbegriff des Anspruchs 1.

Ausgehend von diesem Stand der Technik ist es eine Aufgabe der vorliegenden Erfindung, einen Schwingungsdämpfer der eingangs genannten Art zu schaffen, der einen einfachen und preiswerten Aufbau aufweist und sich problemlos in die schwingungsfähige Struktur integrieren lässt, insbesondere nachrüstbar ausgestaltet ist.

Zur Lösung dieser Aufgabe schafft die vorliegende Erfindung einen aktiven Schwingungsdämpfer zur Dämpfung einer Schwingung einer schwingungsfähigen Struktur, insbesondere eines Krans, gemäß Anspruch 1.

Ein wesentlicher Vorteil eines solchen aktiven Schwingungsdämpfers gegenüber konventionellen passiven Schwingungsdämpfern besteht darin, dass das Gewicht der Dämpfermasse zur Erzielung einer effektiven Schwingungstilgung nur einen Bruchteil des Gewichtes einer Dämpfermasse eines passiven Schwingungstilgers aufweisen muss. Darüber hinaus lässt sich die Auslegung des aktiven Schwingungsdämpfers relativ problemlos an die Anforderungen einer bestehenden oder sich verändernden schwingungsfähigen Struktur anpassen, so dass der Schwingungsdämpfer sehr flexibel einsetzbar ist. Ferner kann der Schwingungsdämpfer in eine bestehende schwingende Struktur mit verhältnismäßig geringem Aufwand integriert werden und ist entsprechend nachrüstbar.

Erfindungsgemäß weist die Regelungseinrichtung einen Lageschätzer auf, der derart ausgebildet ist, dass er basierend auf dem Sensorsignal, bei dem es sich bevorzugt um ein Beschleunigungssignal handelt, ein die Ist-Lage der schwingungsfähigen Struktur repräsentierendes Lagesignal erzeugt, das mit einem Gewichtungsfaktor $d/m$ skaliert und unter Berücksichtigung der Übersetzung des Übertragungsmechanismus in ein Winkelgeschwindigkeitssteuersignal umgerechnet wird, wobei das Winkelgeschwindigkeitssteuersignal als Sollgröße einem Geschwindigkeitsregler der Regelungseinrichtung zugeführt wird.

Die Regelungseinrichtung ist derart eingerichtet, dass eine indirekt über den Motorgeber erfasste Ist-Winkelgeschwindigkeit des Motors als Istgröße dem Geschwindigkeitsregler mit negativen Vorzeichen zugeführt wird. Aufgrund der Tatsache, dass der Schlitten des erfindungsgemäßen Schwingungsdämpfers indirekt über den rotativen Motor angetrieben wird, ist zur Erfassung der Ist- Winkelgeschwindigkeit des Motors also kein zusätzliches direktes Messsystem erforderlich, da die Erfassung direkt über den Motorgeber erfolgen kann.

Die Regelungseinrichtung ist derart ausgelegt, dass basierend auf dem Sensorsignal ein Geschwindigkeitssignal erzeugt wird, das mit einem Dämpfungsfaktor skaliert, unter Berücksichtigung der Übersetzung des Übertragungsmechanismus umgerechnet und dem von dem Geschwindigkeitsregler erzeugte Ansteuersignal aufgeschaltet wird.

Gemäß einer Variante der vorliegenden Erfindung ist ein Stromregler vorgesehen, über den das Ansteuersignal dem Motor zugeführt wird.

Vorteilhaft ist ein Lageregler vorgesehen, dem ein indirekt über den Motorgeber erfasster Ist-Rotationswinkel des Motors als Ist-Größe und ein konstanter Soll-Rotationswinkel zugeführt werden. Dank eines solchen Lagereglers ergibt sich eine stabile Mittellage der Dämpfermasse. Ein Wegdriften wird unterdrückt. Der Lageregler kann zu diesem Zweck beispielsweise als P-Regler oder als PI-Regler ausgebildet sein. Das Ausgangssignal des Lagereglers wird bevorzugt der dem Geschwindigkeitsregler zugeführten Sollgröße aufgeschaltet.

Der Übertragungsmechanismus kann beispielsweise eine Ritzel-Zahnstangen-Kombination, einen Kugelgewindetrieb oder einen Riemen aufweisen.

Ferner kann der Übertragungsmechanismus mit einem Getriebe versehen sein.

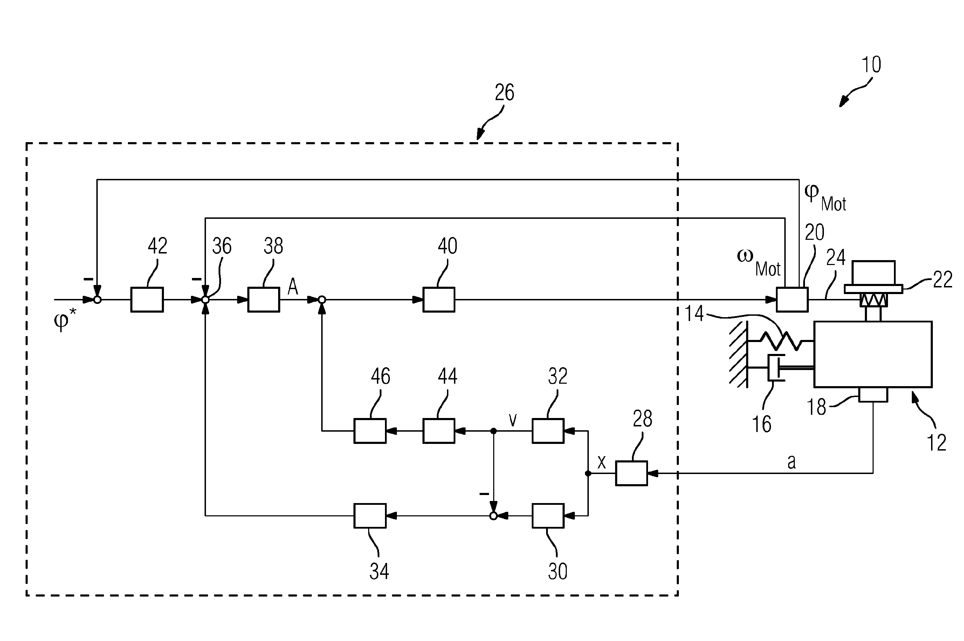

Weitere Merkmale und Vorteile der vorliegenden Erfindung werden anhand der nachfolgenden Beschreibung einer Ausführungsform des erfindungsgemäßen aktiven Schwingungsdämpfers unter Bezugnahme auf die beiliegende Zeichnung deutlich, die eine schematische Darstellung einer Ausführungsform eines erfindungsgemäßen Schwingungsdämpfers zeigt.

Die Zeichnung zeigt schematisch einen aktiven Schwingungsdämpfer 10 gemäß der vorliegenden Erfindung, der zur Dämpfung einer Schwingung einer eine Strukturmasse $m_S$ aufweisenden schwingungsfähigen Struktur 12 dient. Bei der schwingungsfähigen Struktur 12 handelt es sich vorliegend um einen Kran, der einen Träger aufweist, entlang dem eine Laufkratze bewegt werden kann. Die Struktur- bzw. Kranmasse $m_S$ kann sich mit einer geringen Dämpfung in ihrer Eigenfrequenz bewegen, was vorliegend durch die Feder 14 und den Dämpfer 16 schematisch dargestellt ist. An dem Kran 12 ist ein Sensor 18 montiert, der zur Erfassung einer Bewegungskomponente der Kranbewegung ausgelegt ist, vorliegend zur Erfassung der Beschleunigung des Krans 12 relativ zum stillstehenden Bezugssystem und zur Erzeugung eines entsprechenden Beschleunigungssignals. An dem Träger des Krans 12 ist ein einen Motorgeber aufweisender rotativer Motor 20 montiert, über den ein ebenfalls mit der schwingungsfähigen Struktur 12 gekoppelter Schlitten 22 mit der Dämpfermasse $m_{Dämpfer}$ linear entlang eines Teilbereichs des Trägers antreibbar ist. Um die Drehbewegung des Motors 20 mit einer vorbestimmten Übersetzung in eine Linearbewegung des Schlittens 22 zu überführen, ist zwischen dem Motor 20 und dem Schlitten 22 ein entsprechender Übertragungsmechanismus 24 angeordnet, der vorliegend durch eine Ritzel-Zahnstangen-Kombination gebildet wird.

Ziel des Schwingungsdämpfers 10 ist es, eine Schwingung des Krans 12 durch eine Bewegung der Dämpfermasse $m_{Dämpfer}$ zu kompensieren. Das Grundprinzip besteht darin, dass durch die Bewegung des Schlittens 22 eine Kraft entsteht, die aufgrund der Ankopplung an den Kran 10 in entgegen gesetzter Richtung dämpfend auf den Kran 10 wirkt. Mit anderen Worten entspricht die durch die Bewegung des Schlittens 22 entstehende Kraft $F_{Schlitten}$, die gleich dem Quotienten aus dem Motormoment $M_{Mot}$ und dem Radius des Ritzels $R_{Ritzel}$ des Übertragungsmechanismus 24 ist, der negativen Dämpferkraft $F_{Dämpfer}$, die auf den Kran 10 wirkt. Es gilt also:

$$F_{Schlitten} = M_{Mot}/R_{Ritzel} = -F_{Dämpfer}.$$

Zum Berechnen und Generieren des die Kompensationsbewegung veranlassenden Motoransteuersignals weist der Schwingungsdämpfer 10 eine Regelungseinrichtung 26 auf, deren Messgrößeneingang mit dem Schwingungssensor 18 und deren Stellgrößenausgang mit dem Motor 20 verbunden ist.

Die Regelungseinrichtung umfasst einen mit dem Schwingungssensor 18 verbundenen Lageschätzer 28, einen mit dem Lageschätzer verbundenen Skalierer 30, einen D-Regler 32, der ebenfalls mit dem Lageschätzer verbunden ist, ein Glied 34, das mit dem Skalierer 30 und dem D-Regler 32 verbunden ist, einen mit einem Reglereingang 36 versehenen Geschwindigkeitsregler 38, der mit dem Glied 34 und dem Motorgeber des Motors 20 verbunden ist, einen Stromregler 40, der zwischen dem Geschwindigkeitsregler 38 und dem Motor 20 angeordnet ist, und einen Lageregler 42, der dem Geschwindigkeitsregler 38 vorgeschaltet und mit dem Motorgeber des Motors 20 verbunden ist. Ferner umfasst die Regelungseinrichtung Glieder 44 und 46, die zwischen dem D-Regler 32 und dem Stromregler 40 angeordnet sind.

Die Regelungseinrichtung 26 arbeitet wie folgt:

Eine zu dämpfende Schwingung des Krans 12, die insbesondere durch die Laufkatzenbewegung erzeugt wurde, wird über den Sensor 18 als Beschleunigungssignal a erfasst. Das Beschleunigungssignal a wird in einem ersten Schritt dem Lageschätzer 28 zugeführt, der basierend auf dem Beschleunigungssignal a ein Lagesignal x ermittelt. Das Lagesignal x wird in dem Skalierer 30 mit einem Gewichtungsfaktor $d/m_{Dämpfer}$ skaliert, wobei d der gewünschten Dämpfung und $m_{Dämpfer}$ dem Gewicht der Dämpfermasse entspricht. Das Lagesignal x wird ferner dem D-Regler 32 zugeführt, um die Ist-Geschwindigkeit v der schwingungsfähigen Struktur 12 zu ermitteln. Dem mit dem Faktor $d/m_{Dämpfer}$ skalierten Lagesignal x wird dann die ermittelte Ist-Geschwindigkeit v mit negativen Vorzeichen aufgeschaltet, woraufhin im Glied 34 eine Umrechnung entsprechend der Übersetzung des den Motor 20 mit dem Schlitten 22 verbindenden Übertragungsmechanismus 24 stattfindet, vorliegend eine Umrechnung mit dem Faktor $1/R_{Ritzei}$, wobei $R_{Ritzel}$ dem Radius des Ritzels des Übertragungsmechanismus 24 entspricht. Das so erzeugte Winkelgeschwindigkeitssteuersignal wird dann als Sollgröße dem Regeleingang 36 des Geschwindigkeitsreglers 38 zugeführt, der beispielsweise als PI-Regler ausgebildet sein kann, wobei das Winkelgeschwindigkeitssteuersignal auf das Ausgangssignal des Lagereglers 42 aufgeschaltet wird. Dem Lageregler 42 wird als Ist-Wert die direkt über dem Motorgeber erfasste Ist-Lage $\varphi$Mot des Motors 20 mit negativen Vorzeichen und als Sollwert $\varphi^*$ ein konstanter Wert zugeführt. Der Lageregler 42 dient dazu, ein Wegdriften der Dämpfermasse $m_{\text{Dämpfer}}$ zu verhindern.

Dem Geschwindigkeitsregler 38 wird als weiteres Eingangssignal die ebenfalls direkt über dem Motorgeber erfasste Ist-Winkelgeschwindigkeit $\omega_{\text{Mot}}$ des Motors mit negativem Vorzeichen zugeführt. Basierend auf diesen Eingangssignalen ermittelt der Geschwindigkeitsregler 38 dann das Ansteuersignal A, wie es bereits zuvor beschrieben wurde.

Auf den Ausgang des Geschwindigkeitsreglers 38 wird ferner das im Glied 44 mit dem Faktor d, also mit der gewünschten Dämpfung d skalierte Geschwindigkeitssignal v, das im Glied 46 unter Berücksichtigung der Übersetzung des Übertragungsmechanismus 24 (mit dem Faktor $1/R_{\text{Ritzel}}$) umgerechnet wurde, aufgeschaltet und über den Stromregler 40 dem Motor 20 zugeführt.

**Patentansprüche**

1. Aktiver Schwingungsdämpfer (10) zur Dämpfung einer Schwingung einer schwingungsfähigen Struktur (12), insbesondere eines Krans, mit

   - einem an der schwingungsfähigen Struktur (12) montierbaren Sensor (18), der zur Erfassung einer Bewegungskomponente der Strukturbewegung relativ zu einem Bezugssystem und zur Erzeugung eines entsprechenden Sensorsignals ausgelegt ist,
   - einem an der schwingungsfähigen Struktur (12) montierbaren und einen Motorgeber aufweisenden rotativen Motor (20),
   - einem über den Motor (20) linear antreibbaren Schlitten (22), der eine mit der schwingungsfähigen Struktur (12) gekoppelte Dämpfermasse ($m_{\text{Dämpfer}}$) bewegt,
   - einem zwischen dem Motor (20) und dem Schlitten (22) angeordneten Übertragungsmechanismus (24), der die Drehbewegung des Motors (20) mit einer vorbestimmten Übersetzung in eine Linearbewegung des Schlittens (22) überführt, und
   - einer Regelungseinrichtung (26), deren Messgrößeneingang mit dem Sensor (18) verbunden ist und deren Stellgrößenausgang mit dem Motor (20) verbunden ist, wobei die Regelungseinrichtung (26) derart eingerichtet ist, dass basierend auf dem vom Sensor (18) erzeugten Sensorsignal ein Ansteuersignal (A) für den Motor (20) generiert wird, mit dem der Motor (20) derart ansteuerbar ist, dass der Schlitten (22) und somit die Dämpfermasse ($m_{\text{Dämpfer}}$) eine die Schwingung des schwingungsfähigen Systems (12) kompensierende Bewegung relativ zur schwingungsfähigen Struktur (12) ausführen, wobei die Regelungseinrichtung (26) einen Lageschätzer (28) aufweist, der derart ausgebildet ist, dass er basierend auf dem Sensorsignal, bei dem es sich bevorzugt um ein Beschleunigungssignal (a) handelt, ein die Ist-Lage der schwingungsfähigen Struktur (12) repräsentierendes Lagesignal (x) erzeugt, das mit einem Gewichtungsfaktor d/m skaliert und unter Berücksichtigung der Übersetzung des Übertragungsmechanismus (24) in ein Winkelgeschwindigkeitssteuersignal umgerechnet wird, wobei das Winkelgeschwindigkeitssteuersignal als Sollgröße einem Geschwindigkeitsregler (38) der Regelungseinrichtung (26) zugeführt wird, **dadurch gekennzeichnet, dass** die Regelungseinrichtung (26) derart eingerichtet ist, dass eine indirekt über den Motorgeber erfasste Ist- Winkelgeschwindigkeit ($\omega_{\text{Mot}}$) des Motors (20) als Istgröße dem Geschwindigkeitsregler (38) mit negativen Vorzeichen zugeführt wird und dass die Regelungseinrichtung (26) derart ausgelegt ist, dass basierend auf dem Sensorsignal ein Geschwindigkeitssignal (v) erzeugt wird, das mit einem Dämpfungsfaktor d skaliert, unter Berücksichtigung der Übersetzung des Übertragungsmechanismus (24) umgerechnet und dem von dem Geschwindigkeitsregler (38) erzeugte Ansteuersignal (A) aufgeschaltet wird.

2. Schwingungsdämpfer (10) nach Anspruch 1, **dadurch gekennzeichnet, dass** ein Stromregler (40) vorgesehen ist, über den das Ansteuersignal (A) dem Motor (20) zugeführt wird.

3. Schwingungsdämpfer (10) nach einem der vorhergehenden Ansprüche, **dadurch gekennzeichnet, dass** ein Lageregler (42) vorgesehen ist, dem ein indirekt über den Motorgeber erfasster Ist-Rotationswinkel ($\varphi_{\text{Mot}}$) des Motors (20) als Ist-Größe und ein konstanter Soll-Rotationswinkel ($\varphi^*$) zugeführt werden.

4. Schwingungsdämpfer (10) nach einem der vorhergehenden Ansprüche, **dadurch gekennzeichnet, dass** der Übertragungsmechanismus (24) eine Ritzel-Zahnstange, einen Kugelgewindetrieb oder einen Riemen aufweist.

5. Schwingungsdämpfer nach einem der vorhergehenden Ansprüche, **dadurch gekennzeichnet, dass** der Übertragungsmechanismus (24) ein Getriebe aufweist.

**Claims**

1. Active vibration damper (10) for attenuating an oscillation of a vibratory structure (12), in particular a crane, having

   - a sensor (18) which can be mounted on the vibratory structure (12), said sensor being designed to detect a movement component of the structure movement relative to a reference system, and to generate a corresponding sensor signal,
   - a rotary motor (20) which can be mounted on the vibratory structure (12) and which has a motor encoder,
   - a carriage (22) which can be linearly driven by way of the motor (20) and which moves a damping mass ($m_{Damping}$) coupled to the vibratory structure (12),
   - a transmission mechanism (24) arranged between the motor (20) and the carriage (22), which converts the rotary movement of the motor (20) into a linear movement of the carriage (22) with a predetermined mechanical advantage, and
   - a controlling unit (26), the measured variable input of which is connected to the sensor (18) and the manipulated variable output of which is connected to the motor (20), the controlling unit (26) being arranged such that on the basis of the sensor signal generated by the sensor (18) a controlling signal (A) is generated for the motor (20), with which the motor (20) can be controlled such that the carriage (22) and therefore the damping mass ($m_{Damping}$) execute a movement relative to a vibratory structure (12) to compensate for the oscillation of the vibratory system (12), the controlling unit (26) having a position estimator (28) which is designed such that on the basis of the sensor signal, which is preferably an acceleration signal (a), it generates a position signal (x) representing the actual position of the vibratory structure (12), said position signal (x) being scaled with a weighting factor d/m and converted into an angular velocity control signal, taking into account the mechanical advantage of the transmission mechanism (24), the angular velocity control signal being fed to a velocity controller (38) of the controlling unit (26) as a setpoint variable,
   **characterised in that**
   the controlling unit (26) is set up such that an actual angular velocity ($\omega_{Mot}$) of the motor (20) detected indirectly via the motor encoder is fed to the velocity controller (38) with a negative sign as an actual variable and
   **in that**
   the controlling unit (26) is designed such that on the basis of the sensor signal a velocity signal (v) is generated, which is scaled with a damping factor d, is converted, taking into account the mechanical advantage of the transmission mechanism (24), and is applied to the controlling signal (A) generated by the velocity controller (38).

2. Vibration damper (10) according to claim 1, **characterised in that** a current controller (40) is provided, by way of which the controlling signal (A) is fed to the motor (20).

3. Vibration damper (10) according to one of the preceding claims, **characterised in that** a position controller (42) is provided, to which are fed an actual angle of rotation ($\varphi_{Mot}$) of the motor (20), detected indirectly by way of the motor encoder, as an actual variable, and a constant setpoint angle of rotation ($\varphi^*$).

4. Vibration damper (10) according to one of the preceding claims, **characterised in that** the transmission mechanism (24) has a rack and pinion, a ball screw drive or a belt.

5. Vibration damper according to one of the preceding claims, **characterised in that** the transmission mechanism (24) has a gear unit.

**Revendications**

1. Amortisseur ( 10 ) actif d'oscillations pour amortir une oscillation d'une structure ( 12 ) susceptible d'osciller, notamment d'une grue, comprenant

   - un capteur ( 18 ), qui peut être monté sur la structure ( 12 ) susceptible d'osciller, et qui est conçu pour la détection d'une composante du mouvement de la structure par rapport à un système de référence et pour la production d'un signal de capteur correspondant,
   - un moteur ( 20 ) tournant, qui peut être monté sur la structure ( 12 ) susceptible d'osciller et ayant un capteur de moteur,

- un chariot ( 22 ), qui peut être entraîné linéairement par le moteur ( 20 ) et qui met en mouvement une masselotte ( $m_{Dampfer}$ ) d' amortisseur, couplée à la structure ( 12 ) susceptible d'osciller,

- un mécanisme ( 24 ) de transmission, qui est disposé entre le moteur ( 20 ) et le chariot ( 22 ) et qui transforme le mouvement de rotation du moteur ( 20 ), avec une démultiplication déterminée à l'avance, en un déplacement linéaire du chariot ( 22 ) et

- un dispositif ( 26 ) de régulation, dont l'entrée de grandeurs de mesure est reliée au capteur ( 18 ) et dont la sortie de grandeurs de mesure est reliée au moteur ( 20 ), le dispositif ( 26 ) de régulation étant conçu pour produire, sur la base du signal produit par le capteur ( 18 ), un signal ( A ) de commande du moteur ( 20 ), par lequel le moteur ( 20 ) est commandé, de manière à ce que le chariot ( 22 ) et ainsi la masselotte ( $m_{Dampfer}$ ) d'amortisseur exécutent, par rapport à la structure ( 12 ) susceptible d'osciller, un mouvement compensant l'oscillation du système ( 12 ) susceptible d'osciller, le dispositif ( 26 ) de régulation ayant un estimateur ( 28 ) de position, constitué de manière à produire, sur la base du signal du capteur, qui est de préférence un signal ( a ) d'accélération, un signal ( x ) de position représentant la position réelle de la structure ( 12 ) susceptible d'osciller, signal, qui, par un facteur d/m de pondération, est mis à l'échelle et est transformé, en tenant compte de la démultiplication du mécanisme ( 24 ) de transmission, en un signal de commande de vitesse angulaire, le signal de commande de la vitesse angulaire étant envoyé comme grandeur de consigne à un régleur ( 38 ) de vitesse du dispositif ( 26 ) de régulation,

**caractérisé en ce que**

le dispositif ( 26 ) de régulation est conçu de manière à envoyer, avec un signe négatif, au régleur ( 38 ) de vitesse, comme grandeur réelle, une vitesse ( $\omega_{Mot}$ ) angulaire réelle du moteur ( 20 ), détectée indirectement par le capteur de moteur et, **en ce que**

le dispositif ( 26 ) de régulation est conçu de manière à produire, sur la base du signal de capteur, un signal ( v ) de vitesse, qui est mis à l'échelle par un facteur d d'amortissement, qui est transformé par le calcul en tenant compte de la démultiplication du mécanisme ( 24 ) de transmission et qui est appliqué au signal ( A ) de commande produit par le régleur ( 38 ) de vitesse.

2. Amortisseur ( 10 ) d'oscillation suivant la revendication 1, **caractérisé en ce qu'**il est prévu un régleur ( 40 ) de courant, par lequel le signal ( A ) de commande est envoyé au moteur ( 20 ).

3. Amortisseur ( 10 ) d'oscillation suivant l'une des revendications précédentes, **caractérisé en ce qu'**il est prévu un régleur ( 42 ) de position, auquel sont envoyés un angle ( $\varphi^*$ ) de rotation de consigne constant et, comme grandeur réelle, un angle ( $\varphi_{Mot}$ ) de rotation réel du moteur ( 20 ) détecté par le capteur de moteur.

4. Amortisseur ( 10 ) d'oscillation suivant l'une des revendications précédentes, **caractérisé en ce que** le mécanisme ( 24 ) de transmission a un pignon - crémaillère, une vis à billes ou une courroie.

5. Amortisseur ( 10 ) d'oscillation suivant l'une des revendications précédentes, **caractérisé en ce que** le mécanisme ( 24 ) de transmission a un engrenage.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2327651 A1
- JP 61041032 A
- JP 3200694 A
- US 4635892 A
- JP 58220083 A